Europäisches Patentamt

European Patent Office

Office européen des brevets

(19)

(11) Veröffentlichungsnummer: **0 277 296 B1**

# EUROPÄISCHE PATENTSCHRIFT

(12)

(45) Veröffentlichungstag der Patentschrift: 27.02.91

(51) Int. Cl.5: **F02B 23/10**

(21) Anmeldenummer: 87116906.6

(22) Anmeldetag: 17.11.87

(54) **Brennraum für eine Hubkolben-Brennkraftmaschine.**

(30) Priorität: 31.01.87 DE 3702899

(43) Veröffentlichungstag der Anmeldung:
10.08.88 Patentblatt 88/32

(45) Bekanntmachung des Hinweises auf die
Patenterteilung:
27.02.91 Patentblatt 91/09

(84) Benannte Vertragsstaaten:
**DE ES FR GB IT SE**

(56) Entgegenhaltungen:
EP-A- 0 098 619          DE-A- 3 214 096
DE-C- 699 392            FR-A- 870 277
FR-E- 84 772             GB-A- 2 049 811
US-A- 4 203 393          US-A- 4 484 550

(GENERAL MOTORS)

(73) Patentinhaber: **Dr.Ing.h.c. F. Porsche Aktiengesellschaft
Porschestrasse 42
D-7000 Stuttgart 40(DE)**

(72) Erfinder: **Gruden, Dusan, Prof. Dr. Dipl.-Ing.
Aspergstrasse 10
D-7257 Ditzingen(DE)**

Rank Xerox (UK) Business Services

## Beschreibung

Brennraum für eine Hubkolben-Brennkraftmaschine

Die Erfindung bezieht sich auf einen Brennraum nach dem Oberbegriff des Hauptanspruchs.

Aus der US-PS 4 484 550 geht ein Brennraum hervor, der im Zylinderkopf vorgesehen ist und eine, in einer Mittellängsachse des Zylinders angeordnete Zündkerze aufweist. Außerdem umfaßt der Zylinderkopf zwei Einlaßventile und zwei Auslaßventile.

Aufgabe der Erfindung ist es, den Verbrennungsablauf im Brennraum durch geometrische Gestaltungsmaßnahmen sowie Anordnung der Zünd- und Einspritzvorrichtungen günstig zu beeinflussen.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß die durch die Anordnung der Zünd- und Einspritzvorrichtungen sowie der Gestaltung des Brennraums der Verlauf der Entflammungsphase und der Wärmefreisetzung verbessert wird. Insbesondere wird sichergestellt, daß sich die Flamme in der Hauptverbrennungsphase in allen Richtungen, ausgehend von der Zündkerze, gleichmäßig ausbreitet. Außerdem wird mit dieser Ausführung noch erreicht, daß die Klopfgrenze der Brennkraftmaschine derart ist, daß der zum Betrieb der Brennkraftmaschine erforderliche Kraftstoff mit einer niederen Oktanzahl gekennzeichnet sein kann.

In der Zeichnung ist ein Ausführungsbeispiel der Erfindung dargestellt, das nachstehend näher beschrieben ist.

Es zeigt

Fig. 1    eine schematische Ansicht von oben auf einen Zylinder einer Brennkraftmaschine,

Fig. 2    einen Schnitt nach der Linie II-II der Fig. 1.

Von der mehrzylindrigen Brennkraftmaschine 1 ist lediglich ein Zylinder 2 dargestellt, der in einem Zylinderkurbelgehäuse 3 vorgesehen ist. Das Zylinderkurbelgehäuse 3 weist auf der einem Kurbeltrieb (nicht gezeigt) abgekehrten Seite einen Zylinderkopf 4 auf, der zwei Einlaßventile 5, 6 und zwei Auslaßventile 7, 8 umfaßt. Über diese Ventile, die von einer oder zwei nicht dargestellten Nockenwellen betätigt werden, erfolgt die Gaswechselsteuerung in einem Brennraum 9, der zwischen einem, in eine Bohrung 10 eingesetzten Kolben 11 und dem Zylinderkopf 4 vorgesehen ist.

Auf der Seite des Zylinderkopfs 4 umfaßt der Brennraum 8 eine dachförmige Brennraumbegrenzung 12, wobei die Winkellage A und B der Einlaß- und Auslaßventile 4, 5 bzw. 6, 7 durch diese Brennraumbegrenzung 12 definiert ist. Mit 13 ist eine Zündvorrichtung (Zündkerze) bezeichnet, die sich in einer Mittellängsachse C-C des Zylinders 2 erstreckt. Außerdem sind in den Zylinderkopf 4 Einspritzvorrichtungen 14, 15 eingesetzt, die jeweils zwischen den Einlaß- und den Auslaßventilen 5, 6 bzw. 7, 8 angeordnet sind, wobei sie in einem geneigteren Winkel D und E verlaufen, als die Ein- und Auslaßventile. Die Einspritzventile 14, 15 sind - wie die Ventile - im wesentlichen gleichwinkelig zur Mittelachse C-C ausgerichtet.

Der Kolben 11 ist mit einer kugelförmigen Ausnehmung 16 versehen, die zur kolbenseitigen Bildung des Brennraums 9 beiträgt. Die Größe (das Volumen) der Ausnehmung 16 wird durch folgende Beziehung definiert:

$$R = (0,25 - 0,45) D$$

Dabei ist R der Radius der kugelförmigen Ausnehmung 16 und D der Durchmesser des Kolbens 11 und/oder der Bohrung 10 des Zylinders 2.

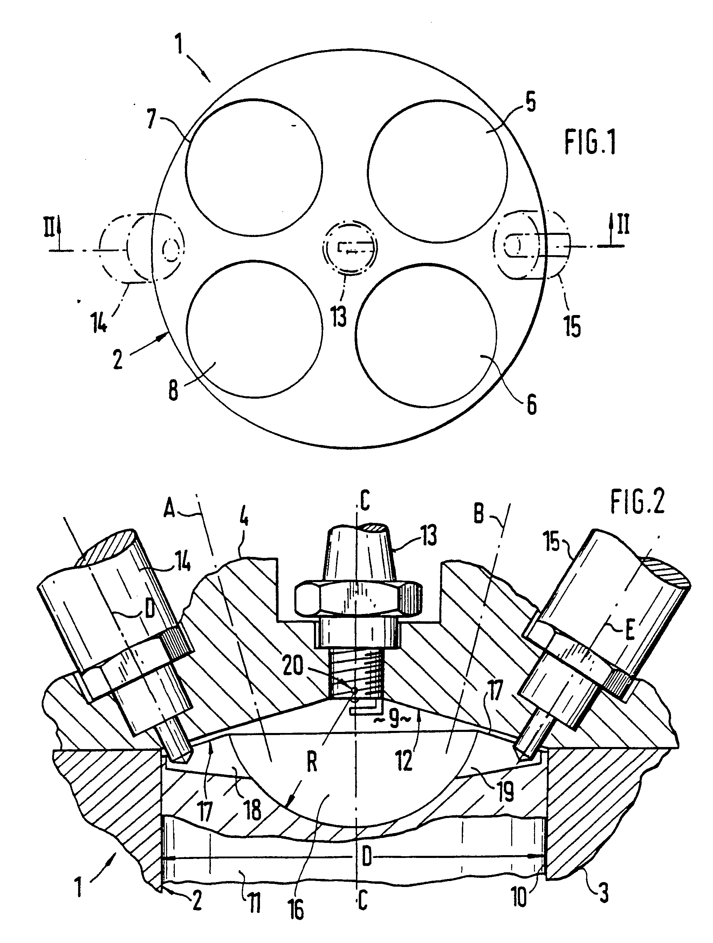

Aus Fig. 2 geht hervor, daß der Einsatzpunkt des Radius R etwa auf der Spitze 20 der dachförmigen Brennraumbegrenzung 12 liegt.

Außerhalb der Ausnehmung 16 ist der Kolben 11 bis dicht an die Brennraumbegrenzung 12 herangeführt und bildet eine Quetschfläche 17, wobei ihre Größe mindestens 12 % der Fläche des Kolbens 11 beträgt. Schließlich weist der Kolben 11 im Bereich der Einspritzvorrichtungen 14, 15 Ausnehmungen 18, 19 auf.

## Ansprüche

1.   Brennraum für eine Hubkolben-Brennkraftmaschine, der zwischen einem Zylinderkopf und einem Kolben vorgesehen ist, und mit einer mehreren Zündvorrichtung und Einspritzvorrichtungen versehen ist, wobei die eine Zündvorrichtung in einer Mittellängsachse des Zylinders verläuft und die Gaswechselsteuerung im Brennraum durch zwei Einlaßventile und zwei Auslaßventile des Zylinderkopfs erfolgt, gekennzeichnet durch folgende Merkmale:

a) die Einspritzvorrichtungen (14, 15) verlaufen im wesentlichen im gleichen Winkel zur Mittellängsachse (C-C) des Zylinders (2);

b) der Kolben (11) umfaßt auf der dem Zylinderkopf (4) zugekehrten Seite eine kugelförmige Ausnehmung (16), deren Radius (R) auf der Mittellängsachse (C-C) des Zylinders (2) liegt;

c) der Kolben (11) ist auf der dem Zylinderkopf zugekehrten Seite außerhalb der Ausnehmung zur Bildung einer Quetschfläche (17) an eine dachförmige Brennraumbegrenzung (12) des Zylinderkopfs (4) herangeführt.

2. Brennraum nach Anspruch 1, dadurch gekennzeichnet, daß die Größe der Kugelförmigen Ausnehmung (16) durch die Beziehung
R = (0,25 - 0,45) D
gebildet wird, wobei (R) der Radius der Ausnehmung (16) und (D) der Durchmesser des Kolbens und/oder der Bohrung (10) des Zylinders (2) ist.

3. Brennraum nach Anspruch 2, dadurch gekennzeichnet, daß der Einsatzpunkt des Radius (R) der Ausnehmung (16) etwa auf der Spitze (20) der Brennraumbegrenzung (12) liegt.

4. Brennraum nach Anspruch 1, dadurch gekennzeichnet, daß der Kolben (11) im Bereich der Einspritzvorrichtungen (14, 15) Ausnehmungen (18, 19) besitzt.

5. Brennraum nach Anspruch 1, dadurch gekennzeichnet, daß die Größe der Quetschfläche (17) mindestens 12 % von der Kolbenfläche beträgt.

## Claims

1. A combustion chamber for a reciprocating-piston internal combustion engine, provided between a cylinder head and a piston, and provided with an ignition device and a plurality of injection devices, one ignition device extending in a median longitudinal axis of the cylinder and the gas-change control being carried out in the combustion chamber by two inlet valves and two exhaust valves of the cylinder head, characterized by the following features
   a) the injection devices (14, 15) extend essentially at the same angle to the median longitudinal axis (C-C) of the cylinder (2);
   b) the piston (11) is provided on the end facing the cylinder head (4) with a spherical recess (16), the radius (R) of which lies on the median longitudinal axis (C-C) of the cylinder (2);
   c) the end of the piston (11) facing the cylinder head is raised up to a roof-shaped combustion-chamber boundary (12) of the cylinder head (4) outside the recess in order to form a squish surface (17).

2. A combustion chamber according to Claim 1, characterized in that the size of the spherical recess (16) is given by the equation

R = (0°25 - 0.45) D
in which (R) is the radius of the recess (16) and (D) is the diameter of the piston and/or the bore (10) of the cylinder (2).

3. A combustion chamber according to Claim 2, characterized in that the centre of the radius (R) of the recess (16) lies substantially at the apex (20) of the combustion-chamber boundary (12).

4. A combustion chamber according to Claim 1, characterized in that the piston (11) has recesses (18, 19) in the region of the injection devices (14, 15).

5. A combustion chamber according to Claim 1, characterized in that the size of the squish surface (17) amounts to at least 12% of the piston surface.

## Revendications

1. Chambre d'explosion pour moteur à combustion interne à piston alternatif, disposée entre une culasse et un piston, et munie d'un dispositif d'allumage et de plusieurs dispositifs d'injection, le dispositif d'allumage étant disposé dans l'axe longitudinal médian du cylindre et la commande alternative des gaz dans la chambre d'explosion étant obtenue par deux soupapes d'admission et deux soupapes d'échappement de la culasse, caractérisée par les caractéristiques suivantes:
   a) les dispositifs d'injection (14, 15) sont disposés sensiblement selon le même angle par rapport à l'axe longitudinal médian (C-C) du cylindre (2);
   b) le piston (11) comprend sur le côté qui est tourné vers la culasse (4) un évidement de forme sphérique (16) dont le rayon (r) a son centre situé sur l'axe longitudinal médian (C-C) du cylindre (2);
   c) le piston (11) est amené par son côté tourné vers la culasse et en dehors de l'évidement contre une surface limite en forme de toit (12) de la chambre d'explosion de la culasse (4) pour former une surface de compression (17).

2. Chambre d'explosion selon la revendication 1, caractérisée en ce que la grandeur de l'évidement de forme sphérique (16) est formée selon le rapport
R = (0,25 - 0,45) D
où (R) représente le rayon de l'évidement (16) et (D) le diamètre du piston et/ou de l'alésage (10) du cylindre (2).

3. Chambre d'explosion selon la revendication 2, caractérisée en ce que le point de départ du rayon (R) de l'évidement (16) est situé sensiblement à la pointe (20) de la surface limite (12) de la chambre d'explosion.

4. Chambre d'explosion selon la revendication 1, caractérisée en ce que le piston (11) comprend des évidements (18, 19) dans la région des dispositifs d'injection (14, 15).

5. Chambre d'explosion selon la revendication 1, caractérisée en ce que la grandeur de la surface de compression (17) représente au moins 12% de la surface du piston.

FIG.1

FIG.2